Europäisches Patentamt

European Patent Office

Office européen des brevets

(19)

(11) Numéro de publication : **0 030 901**
**B1**

(12) **FASCICULE DE BREVET EUROPÉEN**

(45) Date de publication du fascicule du brevet :
04.07.84

(51) Int. Cl.³ : **H 02 K 15/04**

(21) Numéro de dépôt : **80420132.5**

(22) Date de dépôt : **03.12.80**

(54) **Machine pour les bobinages plats ou coniques en forme de disque, pour moteurs électriques.**

(30) Priorité : **05.12.79 FR 7930267**

(43) Date de publication de la demande :
**24.06.81 Bulletin 81/25**

(45) Mention de la délivrance du brevet :
**04.07.84 Bulletin 84/27**

(84) Etats contractants désignés :
**CH DE GB IT LI NL SE**

(56) Documents cités :
**FR-A- 1 558 034**
**GB-A- 1 339 334**
**US-A- 3 599 325**
**US-A- 3 599 680**

(73) Titulaire : **Mavilor Systèmes S.A.**
**Grenette**
**CH-1700 Fribourg (CH)**

(72) Inventeur : **Coquillart, Michel**
**14 rue de Patroa**
**F-42100 St. Etienne Terrenoire (FR)**

(74) Mandataire : **Buttet, Roger et al**
**"Cabinet Charras" 3, Place de l'Hôtel-de-Ville**
**F-42000 Saint-Etienne (FR)**

## Description

L'invention concerne une machine destinée à exécuter automatiquement les bobinages d'un rotor plat ou conique en forme de disque.

On connaît des machines destinées au bobinage des induits correspondant au préambule de la revendication 1 (Brevets FR-A-1.558.034 US-A-3.599.680, US-A-3.599.325), comprenant un plateau porte-bobines entraîné en rotation, et un moyen de distribution de fil à déplacement radial par rapport audit plateau, pour former en continu des bobines.

De telles machines sont compliquées et ne permettent pas une évacuation rationnelle et économique du bobinage.

La présente invention a pour but de remédier à ces inconvénients.

L'invention telle que caractérisée dans les revendications, résout le problème mentionné ci-dessus.

Les caractéristiques de l'invention ressortiront bien de la suite de la description.

Pour fixer l'objet de l'invention, sans toutefois le limiter, aux figures des dessins annexés :

La figure 1 est une vue d'ensemble montrant la bobineuse avec l'organe de plaquage des bobines en cours de réalisation, représenté volontairement en position fausse pour la bonne lecture du dessin, comme expliqué par la suite.

La figure 2 est à plus grande échelle, une vue en coupe suivant la ligne 2-2 de la figure 1, montrant les moyens de plaquage des bobines en cours de réalisation sur le porte-bobines.

La figure 3 est à plus grande échelle, une vue en plan correspondant à la figure 1 et représentant le plateau porte-bobines, le guide-fil, et les moyens de retenue des bobines, dans deux positions différentes.

La figure 4 est à plus grande échelle, une vue en coupe correspondant à la figure 1, des plateaux porte-bobines et porte-came, ainsi que de leurs moyens d'entraînement, représentés en position de travail.

La figure 5 est une vue en coupe partielle du plateau porte-bobines représenté en position d'appui des moyens de plaquage des bobines, et avant démontage du plateau.

La figure 6 est à grande échelle, une vue en coupe correspondant à la figure 1 et illustrant l'ensemble moteur-embrayage-frein.

La figure 7 est une vue en coupe suivant la ligne 7-7 de la figure 8, montrant le palier-support du guide-fil.

Les figures 8 et 9 sont des vues en coupe, respectivement suivant les lignes 8-8 et 9-9 de la figure .7, montrant le palier support et les commandes du guide-fil.

La figure 10 est une vue en coupe suivant la ligne 10-10 de la figure 9, montrant l'organe de liaison des commandes du guide-fil.

La figure 11 est un schéma illustrant le circuit pneumatique de commande des vérins du guide-fil et de l'organe de plaquage des bobines.

La figure 12 est une vue en coupe partielle, à grande échelle, illustrant un exemple de réalisation de l'outil-presseur.

La figure 13 est une vue partielle, en plan, montrant une partie de bobinage réalisée sur la bobineuse.

La machine pour le bobinage comporte essentiellement un bâti, console ou table 1 formé d'une équerre entretoisés, solidaire d'une structure générale. Dans l'angle de l'équerre, s'articule sur un axe 2 et des paliers 3 et 4, un support 5 composé d'un montant 5a et de trois platines 5b-5c-5d, et relié en tension avec le bâti, par un tirant 69.

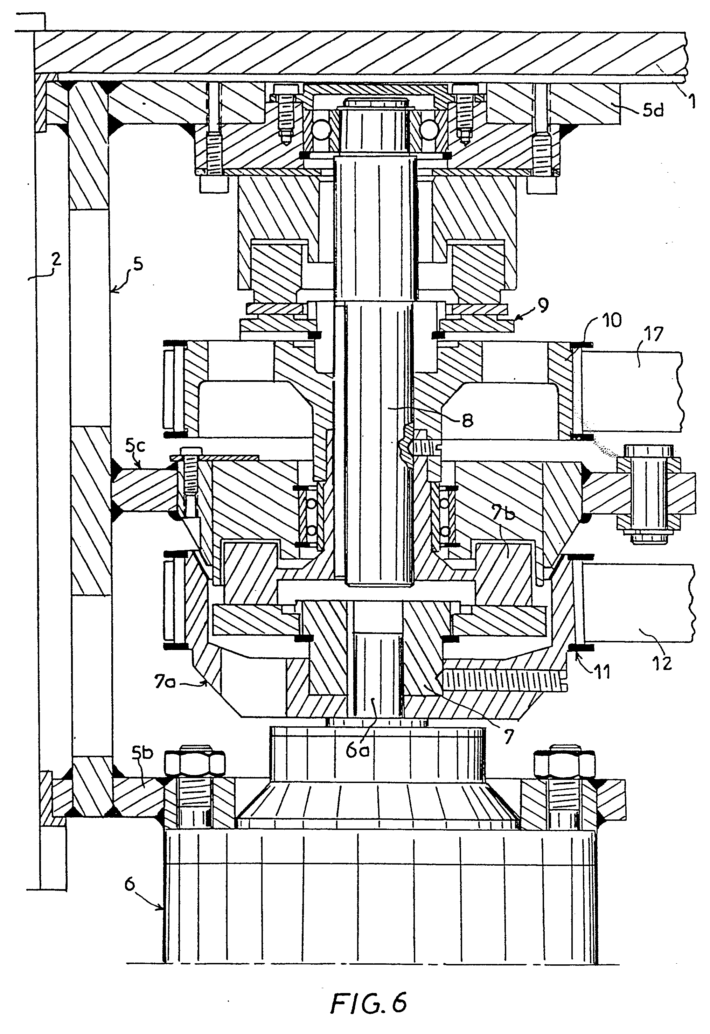

La platine inférieure 5b porte le moteur de commande 6 dont l'arbre de sortie 6a (figure 6) entraîne la poulie 11, tandis que la partie 7b de l'embrayage est calée sur un arbre 8 et tourne dans la platine centrale 5c.

L'arbre 8 est également guidé à rotation libre, sur la platine supérieure 5d, laquelle porte le frein 9 destiné à arrêter une poulie 10 calée sur l'arbre 8 et reliée à la partie 7b de l'embrayage.

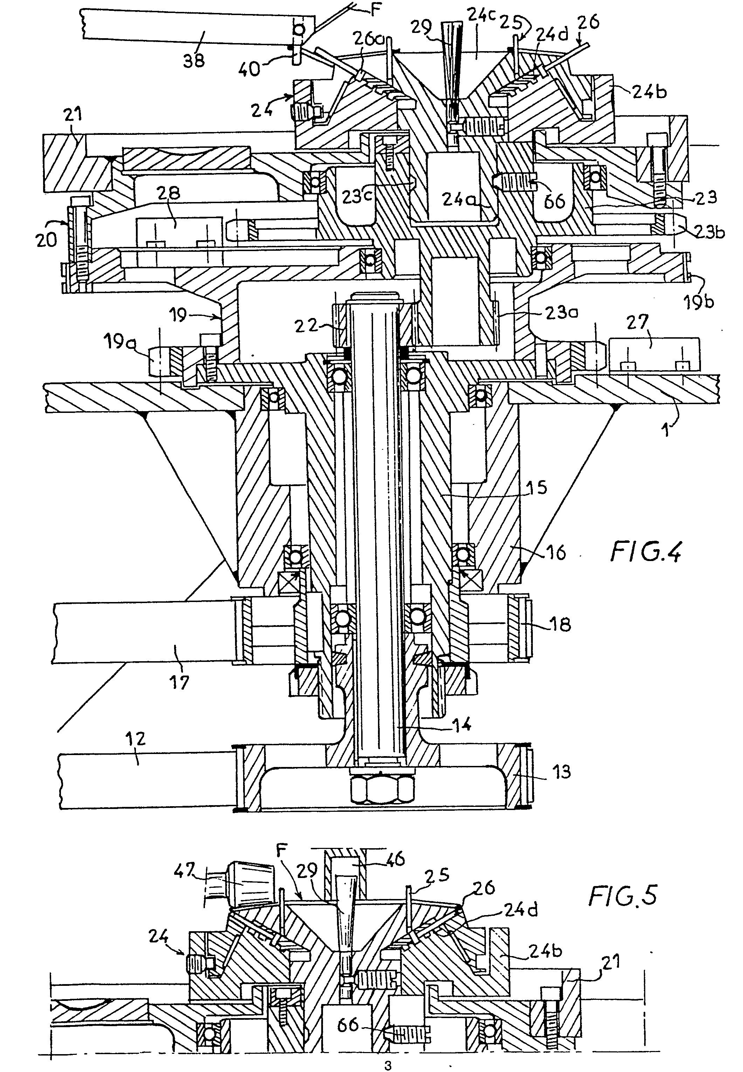

La poulie 11 qui tourne toujours avec le moteur, entraîne par courroie 12, une poulie 13 calée en bout d'un arbre 14 tournant dans un fourreau 15, lui-même monté tournant sur un palier 16 fixé sur la console 1 (figure 4).

La poulie 10, quand l'embrayage est actionné, entraîne par courroie 17, une poulie 18 calée à la partie inférieure du fourreau 15, lequel porte à la partie supérieure, un plateau rotatif 19 lui-même relié à un plateau 20 appelé par la suite «plateau porte-came» en ce sens qu'il porte une came 21 à double profil, c'est-à-dire un profil vertical périphérique et un profil horizontal à la partie supérieure.

A la partie supérieure de l'arbre 14 est calé un pignon 22 engrenant avec un autre pignon 23a solidaire d'un pivot 23 dans lequel est montée la partie 24a d'un plateau 24 appelé par la suite «plateau porte-bobines» en ce sens qu'entre cette partie 24a et une partie périphérique 24b, ainsi que sur la partie 24a, sont prévus des supports des bobines à réaliser.

Ces supports sont constitués par deux types d'aiguilles, à savoir : une pluralité d'aiguilles 25 plantées verticalement et à égale distance sur un cercle de la partie 24a du plateau, autour d'une cuvette 24c, et une pluralité d'aiguilles 26 disposées de manière inclinée vers l'extérieur, dans la partie 24a du plateau, par leur tête épaulée 26a engagée dans une rainure hélicoïdale 24d de la partie 24b, de façon à pouvoir être rétractées ou déployées par rotation de ladite partie 24b par rapport à la partie 24a.

Le pivot 23 et le plateau rotatif 19 présentent encore une couronne dentée 23b-19a destinée à tourner devant des capteurs 27-28 de comptage, reliés à l'armoire de commande et d'enregistrement des rotations.

Le capteur 28 est relié électriquement avec une couronne conductrice 19b du plateau 19, en contact avec des balais (non représentés) pour la transmission du courant à l'armoire.

Au centre de la cuvette 24c est montée une broche conique 29 débordant au-dessus du plateau 24, le petit diamètre étant vers le bas, pour des raisons développées plus loin.

A noter que la bobineuse peut avoir plusieurs plateaux porte-bobines et plusieurs cames à double profil interchangeables, afin de réaliser les bobinages de caractéristiques différentes en dimensions.

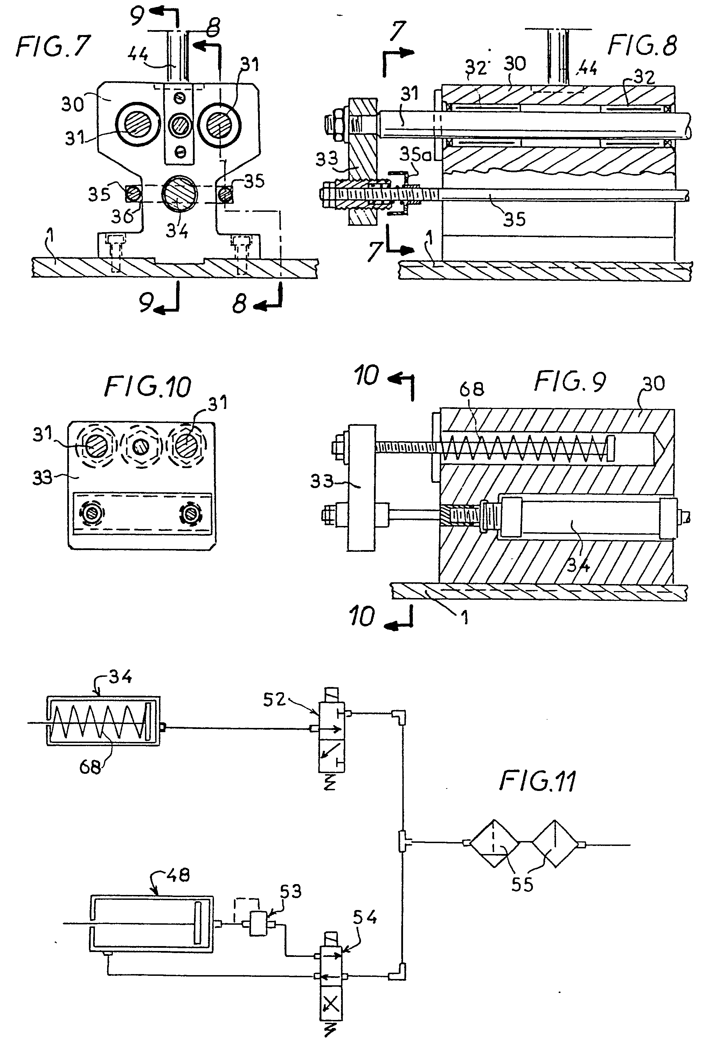

Un dispositif guide-fil est associé au porte-bobines 24 et à la came 21, en vue d'opérer le bobinage. A cet effet, un palier-support 30 est fixé sur la console 1 (figure 7). La partie supérieure de ce palier-support profilé, est traversée par deux coulisseaux 31 guidés dans des douilles à billes 32 (figure 8) et attachés à l'arrière, à une plaque de liaison 33 avec ressort de rappel 68, en bas de laquelle s'attache la tige de piston d'un vérin simple effet 34 logé dans le palier-support et destiné à dégager le guide-fil de la came (figure 9) à l'encontre du ressort 68.

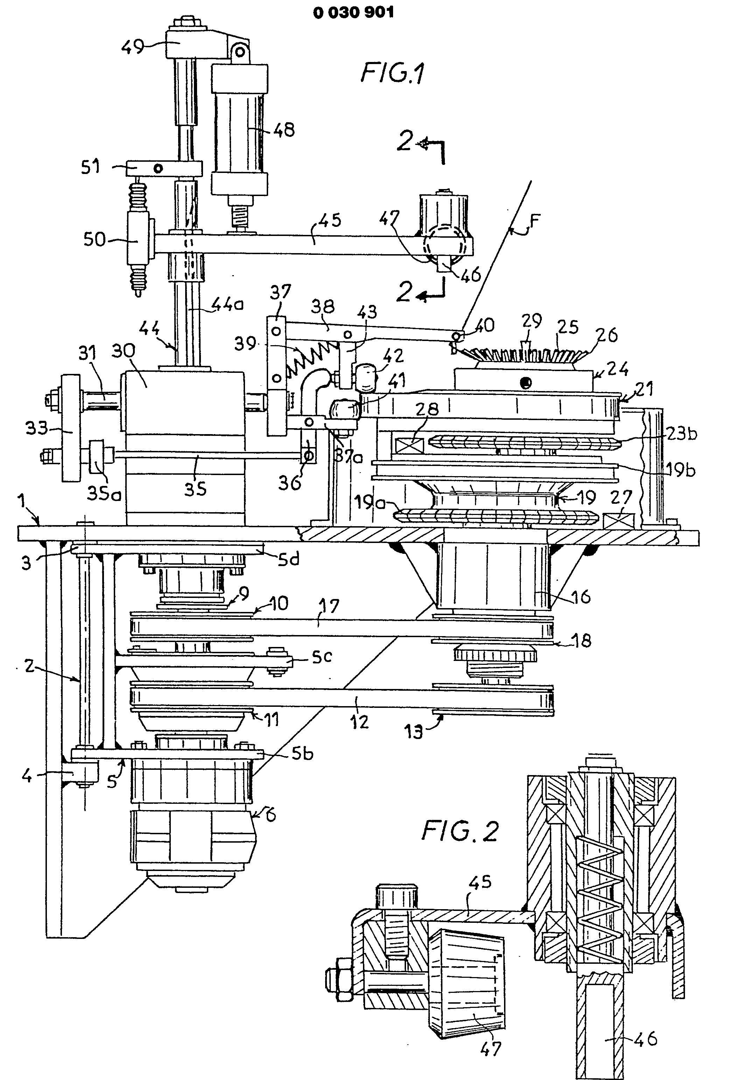

A la base de la plaque de liaison s'attachent latéralement des tringles 35 (figures 8 et 10) passant de chaque côté du palier-support 30 et reliées élastiquement en 35 à un palonnier 36 articulé sur la saillie 37a d'une tête 37 fixée en bout des coulisseaux 31 (figure 1).

La tête 37 porte également à la partie supérieure et de manière articulée, un bras 38 maintenu par ressort 39 à la position basse et équipé en bout d'un organe guide-fil 40.

La saillie 37a de la tête 37 porte en bout à rotation libre, un galet 41 s'appuyant à roulement contre le profil périphérique de la came, tandis qu'un autre galet 42 est porté à roulement par un support 43 articulé au bras 38, et s'appuie à roulement sur le profil supérieur de la came (figure 1), l'axe de rotation du galet 42 étant en appui également contre l'extrémité recourbée supérieure du palonnier 36.

Le palier-support 30 porte à la face supérieure, une colonne 44 sur laquelle est montée à pivotement, une potence 45 (figures 1, 2 et 3), dont l'extrémité libre est équipée d'un doigt creux 46 poussé élastiquement vers le bas pour coiffer la broche 29 dans certaines phases de fonctionnement. Ladite extrémité porte encore à rotation libre, un galet 47 destiné également dans certaines phases, à presser les bobines formées les unes sur les autres.

La potence est réglable en hauteur par un vérin double effet 48 suspendu sur une chape 49 fixée en haut de la colonne et attaché à la potence.

L'actionnement du vérin provoque la descente ou la montée et le pivotement de la potence par liaison avec une rampe hélicoïdale 44a de la colonne (figure 1), la course de la potence étant contrôlée par un contacteur 50 solidaire de la potence, et dont les tiges de contact s'appuient alternativement sur le palier-support 30 et sur une butée 51 fixée de manière réglable sur la colonne 44 (figure 1).

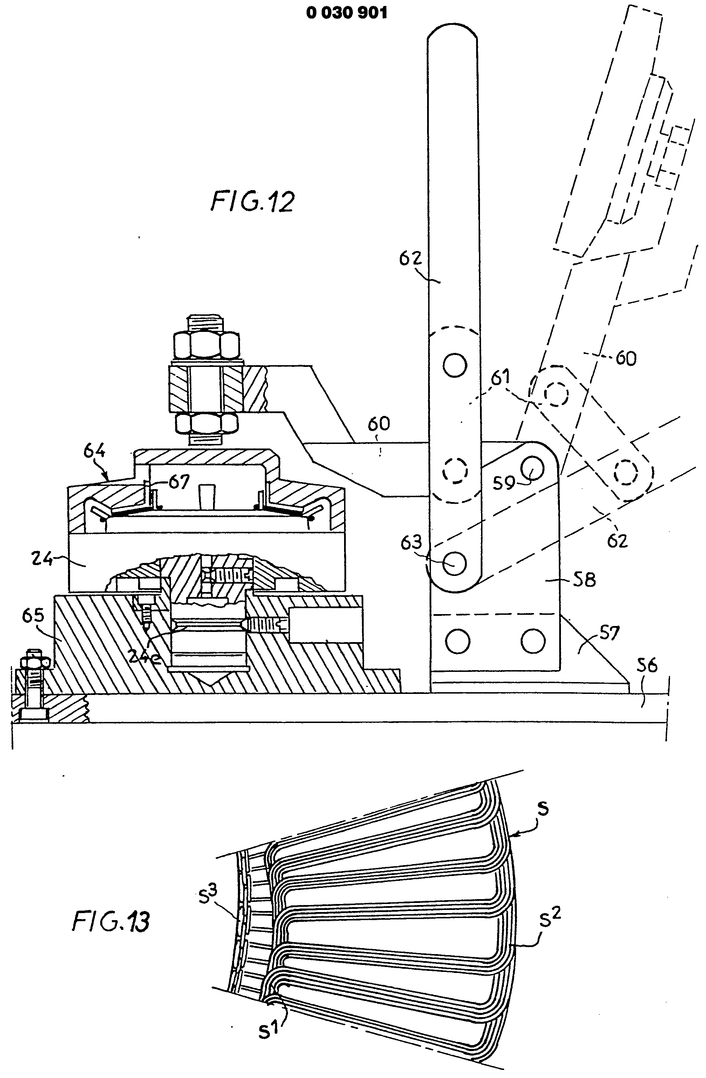

A la figure 11, on a illustré le schéma de l'installation pneumatique de commande du guide-fil et de l'organe presse-bobines.

On voit que le vérin 34 de dégagement du guide-fil est relié à une électrovalve 52, tandis que le vérin 48 de commande de la potence portant le galet-presseur de bobines, est relié à un réducteur de débit 53 puis à une électrovalve 54. Les deux circuits se rejoignent pour aller au réseau d'air en passant par deux filtres 55.

A la figure 12, on a illustré l'appareil à agglomérer les bobines, solidaire de la table 1. Cet appareil comprend une semelle 56 fixée sur la table et portant un sabot 57 de fixation d'une chape 58 sur laquelle s'articule en 59 un bras-support 60 relié par une biellette 61 à un levier de manœuvre 62 axé à pivotement en 63, sur la chape.

A l'extrémité libre du bras 60 est fixé un chapeau 64 destiné à coiffer le plateau porte-bobines 24 positionné sur un socle 65, et que l'on a enlevé du pivot 23 de la bobineuse sur lequel il est normalement monté et retenu de manière amovible, par une vis pointeau 66 engagée dans une rainure 24e du plateau (figure 4).

A noter que l'on peut prévoir l'appareil agissant directement sur le plateau porte-bobines encore en place sur le pivot 23.

Le chapeau 64 porte intérieurement une couronne 67 correspondant à l'emplacement des bobines, et réalisée en matière isolante. On fait passer dans le fil de bobinage, un courant d'intensité suffisante, afin d'opérer la liaison des bobines terminées par ramollisseur de la résine isolante entourant le fil.

On décrit maintenant, en se référant plus particulièrement aux figures 1, 3, 4 et 5 des dessins, le fonctionnement de la machine à bobiner.

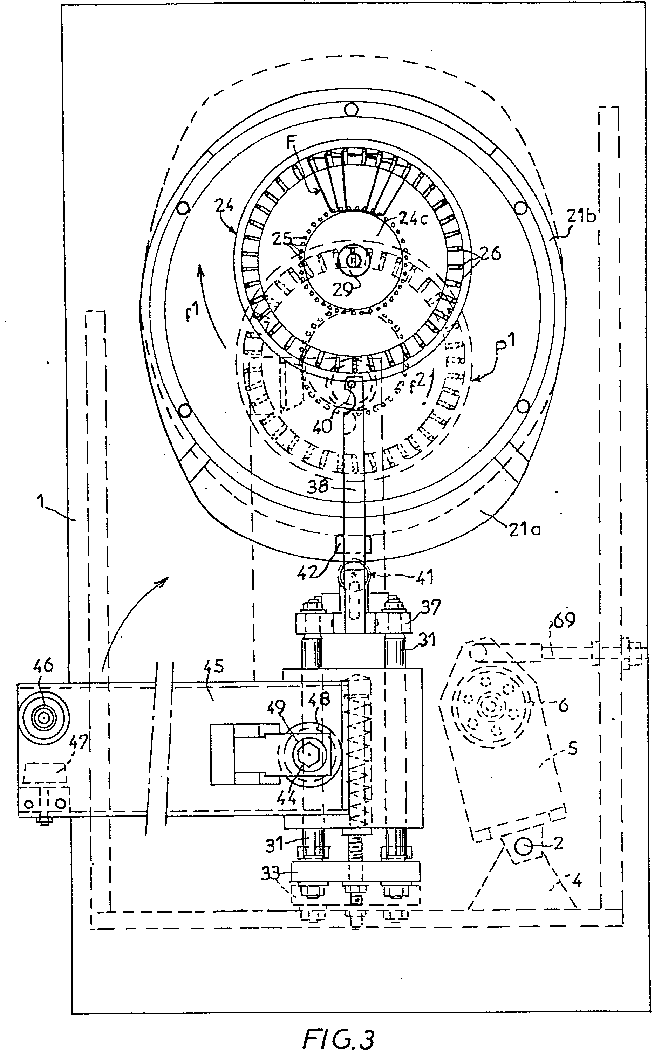

Au départ, le plateau porte-bobines 24 est placé comme illustré en P1 à la figure 3, c'est-à-dire au plus près et dans l'axe du guide-fil qui est alors placé approximativement au-dessus des aiguilles verticales 25. Le fil de bobinage F est amené dans le guide-fil et attaché à la broche conique 29.

Le moteur de commande 6 est alors actionné et l'embrayage entraîne les poulies 10-11 qui entraînent à leur tour les poulies 13-18. Le plateau 19 tourne en entraînant avec lui le plateau porte-bobines 24 (flèche F1, figure 3) ; dans ce mouvement, le fil passe derrière plusieurs aiguilles 25 (le nombre étant fonction de la dimension en section des bobines que l'on a choisies). Comme le plateau porte-bobines est également entraîné en rotation inverse (flèche F2, figure 3) sur lui-même, par les poulies 11 et 13 et les pignons 22-23a de même nombre de dents, le plateau porte-bobines est donc fixe en rotation et n'a qu'un mouvement orbital autour de l'axe du plateau porte-came. Le fil F se dirige vers l'extérieur du plateau porte-bobines et passe devant les aiguilles inclinées 26, puis revient au point de départ sur une aiguille verticale 25. A cet instant, le ressort 68 du guide-fil l'entraîne vers le centre du plateau porte-bobines 24 afin que le fil passe autour de la broche conique 29 en constituant ainsi un tour mort nécessaire pour le raccordement ultérieur du fil avec le collecteur à lames par coupe de la boucle du tour mort.

Lorsque la bobine est exécutée, on agit sur le frein 9 pour empêcher les poulies 10 et 18 de tourner avec l'embrayage. Seules les poulies 11 et 13 continuent à tourner et entraînent le plateau porte-bobines seul, par l'intermédiaire des pignons 22-23a (figure 4). Cette rotation du porte-bobines seul est mise en œuvre sur un angle donné, afin d'opérer un décalage déterminé de la bobine suivante. Le cycle reprend alors dans les mêmes conditions que précédemment, jusqu'à formation de toutes les bobines de forme trapézoïdale superposées, d'une part en plusieurs couches ou empilement, et d'autre part, en décalage entre chaque empilement (figure 3).

Pendant la formation d'une bobine, la came 21 à double profil agit sur les galets suiveurs 41-42, afin de modifier la position du guide-fil, d'une part radialement pour parcourir la distance entre les aiguilles 25 et 26, et d'autre part, en hauteur (le secteur 21a de la came est plus haut que le secteur complémentaire 21b, figure 3), pour former périphériquement à l'intérieur et à l'extérieur, un relevage des bobines S constituant des bourrelets de rigidité S1-S2 qui seront enrobés comme la surface restante des bobines, par une résine appropriée (voir figure 13).

A noter que les conditions de bobinage (décalage des bobines, nombre de bobines...) sont données par les pignons 19a-23b reliés aux capteurs de comptage 27-28 et par le jeu des plateaux porte-bobines et de la came.

Lorsqu'une bobine est terminée, la potence 45 qui est normalement (en inactivité) dans la position illustrée en traits continus à la figure 3, est pivotée et abaissée par actionnement du vérin 48 et de la rampe 44a de la colonne 44, ce mouvement étant contrôlé par le contacteur 50. On note à ce sujet qu'à la figure 1, pour la bonne lecture du dessin, on a représenté la potence 45 en position de travail (position en traits interrompus de la figure 3, mais en position relevée comme dans la position normale d'inactivité.

Lorsque la potence se trouve en position de travail, son doigt creux 46 coiffe la broche conique 29 en empêchant les tours morts S3, tandis que son galet 47 s'appuie fortement sur les bobines pour que le bobinage forme un disque plat (figure 5).

Les bobines ainsi constituées sont alors assemblées entre elles comme on l'a vu précédemment, par l'outil-presseur tel que décrit, soit sur le porte-bobines en place, soit sur le porte-bobines enlevé et disposé sur le socle 65.

Pour enlever le bobinage du plateau porte-bobines, il suffit de faire tourner la partie 24a du plateau pour opérer le retrait des aiguilles inclinées 26 engagées dans la rainure hélicoïdale 24d, donc la libération des bobines.

Les avantages ressortent bien de la description, on souligne en particulier :

— l'exécution rationnelle et économique du bobinage des collecteurs plats, par une machine automatique de construction robuste et fiable, par l'emploi de composants technologiques simples et éprouvés ;

— la réalisation de bobinages de définition différente par les nombreux réglages possibles (nombre de bobines, dimensions des bobines...) ;

— l'assemblage économique des bobines entre elles par ramollissement de la résine entourant les fils, à l'aide de l'outil-presseur, qui supprime les opérations longues et onéreuses de ligature par fils textiles et autres moyens, à la périphérie du bobinage, près du centre et dans la partie médiane ;

— la simplification des opérations ultérieures d'assemblage au collecteur, par le positionnement des fils sortant au centre sous forme de tours morts qu'il suffit de couper et de raccorder au collecteur.

**Revendications**

1. Machine pour les bobinages plats ou coniques en forme de disque pour moteurs électriques, du type comprenant un plateau porte-bobines rond (24) entraîné en rotation et un moyen de distribution de fil à déplacement radial par rapport au plateau, pour former en continu des bobines, caractérisé en ce qu'elle comprend un ensemble moteur-embrayage-frein (6, 7, 9) monté pivotant sur un support (5) pour entraîner en rotation, par l'intermédiaire d'un ensemble de transmission, soit un plateau porte-came presque rond (20) avec une came double profil (21) et le plateau porte-bobines (24), soit seulement le plateau porte-bobines (24), le plateau porte-bobines (24) couvrant une partie décentrée du plateau porte-came (20) et tournant en sens inverse du sens de rotation de celui-ci ; et en ce que le moyen de distribution de fil comprend des galets (41, 42) qui coopèrent avec la came double profil (21) du plateau (20) pour modifier la position du moyen de distribution de fil d'une part radialement et d'autre part en hauteur par rapport au plateau porte-bobine (24).

2. Machine selon la revendication 1, caractérisée en ce que l'ensemble moteur-embrayage-frein (6, 7, 9) est monté sur trois platines (5b, 5c, 5d) solidaires d'un support (5) axé à pivotement sous la table (1), console ou bâti, maintenu en position de tension correcte des courroies (12, 17) ou organes similaires de transmission, par un tirant (69) articulé au support (5) et au bâti (1).

3. Machine selon la revendication 2, caractérisée en ce que le moteur de commande (6) est suspendu sous la platine inférieure (5b) du support (5) de montage de l'ensemble moteur, l'embrayage électromagnétique (7) est porté par la platine centrale (5c) du support, et le frein (9) est suspendu sous la platine supérieure (5d) du support (5) ; un arbre rotatif (8) reliant le frein et l'embrayage, par l'intermédiaire de roulements, tandis que l'arbre de sortie moteur (6a) est relié à l'embrayage par un disque (7a) calé sur ledit arbre.

4. Machine selon la revendication 3, caractérisée en ce que l'ensemble de transmission reliant l'ensemble moteur-frein-embrayage (6, 7, 9) aux plateaux porte-came (20) et porte-bobines (24), comprend en premier lieu une poulie (11) ou organe similaire, calée sur le disque d'embrayage (7a) et reliée par courroie (12) ou organe équivalent à une poulie (13) ou organe similaire, calée en bout d'un arbre (14) d'entraînement en rotation du plateau porte-bobines (24), puis une autre poulie (10) coaxiale à la poulie (11) de l'arbre moteur, est calée sur l'arbre du frein, ladite poulie étant reliée par courroie (17) à une poulie (18) coaxiale à la poulie (13) du plateau porte-bobines (24) et entraînant le plateau porte-came (20).

5. Machine selon la revendication 4, caractérisée en ce que le plateau porte-came (20) et le plateau porte-bobines (24) ont des axes de rotation décalés ; l'arbre (14) portant en bout la poulie (13) d'entraînement du plateau porte-bobines (24) étant dans l'axe de rotation du plateau porte-came (20), tandis que le plateau porte-bobines (24) a seulement un mouvement orbital autour de l'axe du plateau porte-came (20), par l'intermédiaire d'une transmission à engrenages.

6. Machine selon la revendication 1, dans laquelle le plateau porte-bobines (24) présente des moyens de réception des fils (F) constituant les bobines (S), caractérisée en ce que ces moyens comprennent à partir du centre dudit plateau et sa partie supérieure : une broche conique (29) à conicité orientée vers le bas pour l'enroulement d'un tour mort (S3), après la réalisation de chaque bobine, une pluralité d'aiguilles verticales (25) régulièrement réparties suivant un diamètre, et d'aiguilles (26) inclinées vers l'extérieur, en même nombre que les aiguilles verticales et également réparties, de sorte que par déplacements cycliques du guide-fil (45) qui fait partie du moyen de distribution de fil et qui est mû par la came (21) le fil est amené autour de ces broches et aiguilles en réalisant des bobines de forme générale trapézoïdale.

7. Machine selon la revendication 6, caractérisée en ce que les aiguilles verticales (25) sont fixées sur la partie (24a) formant le moyeu du plateau porte-bobines (24), tandis que les aiguilles inclinées (26) sont montées à coulissement entre ledit moyeu et une partie périphérique (24b) tournante du plateau qui présente une rainure hélicoïdale (24d) réalisée perpendiculairement à l'axe des aiguilles inclinées (26) et dans laquelle sont positionnées les têtes épaulées (26a) desdites aiguilles qui peuvent être ainsi escamotées dans le plateau porte-bobines (24) par rotation de la partie périphérique (24b) par rapport au moyeu (24a).

8. Machine selon l'une des revendications 6 ou 7, caractérisée en ce que la came double profil (21) solidaire du plateau (20) sur lequel tourne le plateau porte-bobines (24), présente un profil périphérique vertical et un profil supérieur horizontal qui coopèrent avec les galets (41-42) reliés au guide-fil pour que le fil (F) de bobinage qu'il tient, décrive le trajet autour des aiguilles (25-26) et de la broche conique (29) par déplacements horizontaux et verticaux du guide-fil.

9. Machine selon l'une des revendications 6 à 8, caractérisée en ce que le guide-fil est composé d'un bras (38) articulé à la partie terminale de deux coulisseaux (31) et rappelé en position basse par un ressort (39) pour l'appui constant du galet (42) du profil horizontal lui-même articulé audit bras, les coulisseaux (31) traversant un palier (30) solidaire du bâti (1), sont fixés à une plaque (33) les reliant à un vérin (34) de dégagement du guide-fil et à des tringles horizontales (35) poussées élastiquement en direction de la came et attachées à un palonnier (36) articulé à une saillie (37a) de la partie terminale des coulisseaux qui porte le galet de contact (41) sur le profil périphérique de la came (21) ; l'extrémité supérieure du palonnier (36) s'appuyant contre le galet de contact (42) avec le profil supérieur de la came (21).

10. Machine selon la revendication 9, caractérisée en ce que le palier-support (30) du guide-fil porte à la face supérieure, une colonne (44) sur laquelle est montée à pivotement et mobile verticalement, une potence (45) dont l'extrémité libre porte d'une part, un doigt creux (46) élastiquement poussé vers le bas pour coiffer la broche conique (29) du plateau porte-bobines (24), afin de maintenir les tours morts (S3) du fil au centre des bobines et d'autre part, un galet (47) de pression des bobines formées les unes sur les autres en décalage approprié ; la potence (45) étant commandée en hauteur par un vérin (48) suspendu en haut de la colonne (44) et à pivotement, par une rampe hélicoïdale (44a) ; la course de la potence étant contrôlée par un contact de fin de course (50) solidaire de ladite potence et agissant contre des butées fixe (30) et mobile (51), convenables.

11. Machine selon l'une des revendications 1 à 5, caractérisée en ce que les plateaux porte-came (20) et porte-bobines (24) présentent chacun un disque ou pignon denté (19a-23b) se déplaçant en rotation par rapport à un capteur (27-28) destiné à compter le nombre de dents lors de chaque rotation.

12. Machine selon la revendication 11, caractérisée en ce que le capteur (28) en regard du disque denté (23b) solidaire du plateau porte-bobines (24), transmet ses signaux à l'armoire de commande, par des anneaux ou frotteurs annulaires (19b) fixés à la périphérie du plateau porte-came (20) et contre lesquels prennent appui des balais fixes.

13. Machine selon la revendication 1, caractérisée en ce qu'elle comprend un outil-presseur solidaire du bâti de la machine qui assemble les bobines entre-elles et qui est constitué par un chapeau ou presse (64), porté par un bras (60) articulé à un support (58) du bâti et manœuvrable par un levier (62) pour être relevé en arrière ou abaissé sur le plateau porte-bobines (24) en vue du pressage manuel.

14. Machine selon la revendication 13, caractérisée en ce que le chapeau-presseur (64) présente au moins une partie annulaire (67) correspondant à l'emplacement des bobines, réalisée en matériau isolant, afin d'opérer la liaison des bobines entre-elles par ramollissement de la résine isolante du fil, sous l'action d'un courant électrique d'intensité suffisante passant dans le fil.

**Claims**

1. Machine for flat or conical disk-shaped coilings for electric motors, of the type comprising a coil holding plate (24) driven for rotation and a wire distribution means with radial shifting relative to the plate, for the continuous formation of the coils, characterized in that said machine incorporates a motor-clutch-brake assembly (6-7-9) mounted pivotally at (2) on a support (5) and driving in rotation through the intermediary of a transmission assembly, either a cam holding plate (20) and the coil holding plate (24), or the coil holding plate (24) only, in order to accommodate the wires (F) and to constitute in connection with rollers (41-42) associated with the wire distribution means and cooperating with the double contour cam (21) of the plate (20) the coils (S) adjustable in V-shaped section and in offset positioning, extending crown-like, with in the center dead turns (S3) which serve for the connection with the commutator, the coilings being then inter-assembled by a pressure tool integral with the framework.

2. Machine as claimed in claim 1, characterized in that the motor-clutch-brake assembly (6-7-9) is mounted on three platens (5b-5c-5d) integram with a support (5) linked pivotally at (2) underneath the table (1), bracket or framework, and held in the correct tensioning position of the belts (12-17) or similar transmission organs by a tie rod (69) linked hingedly to the support (5) and to the framework (1).

3. Machine as claimed in claims 1-2, characterized in that the drive motor (6) is hanging under the lower platen (5b) of the support (5) for mounting the motor assembly, the electromagnetic clutch (7) being supported by the central platen (5c) of the support and the brake (9) hanging under the upper platen (5d) of the support (5), a rotary shaft (8) connecting the brake and the clutch through the intermediary of bearings, while the motor output shaft (6a) is connected to the clutch by a disk (7a) keyed up onto said shaft.

4. Machine as claimed in claims 1-3, characterized in that the transmission assembly connecting the motor-clutch-brake-assembly (6-7-9) to the cam holding plate (20) and the coil holding plate (21) comprises in the first place a pulley (11) or similar organ keyed up at the end of a shaft (14) for driving in rotation the coil holding plate (24), a further pulley (10) coaxial with the pulley (11) of the motor shaft being keyed up onto the shaft of the brake, said pulley being connected by a belt (17) to a pulley (18) coaxial with the pulley (13) of the coil holding plate (24) and driving the cam holding plate (20).

5. Machine as claimed in claim 1, characterized in that the cam holding plate (20) and the coil holding plate (24) are mounted with offset rotation centre lines ; the shaft (14) supporting at the end thereof the pulley (13) for driving the coil holding plate (24) being within the rotation centre line of the cam holding plate (20), while the coil holding plate (24) has an orbital motion only around the centre line of the cam holding plate, through the intermediary of a gear transmission.

6. Machine as claimed in claim 1, in which the coil holding plate (24) is provided with reception means for the wires (F) which constitute the coils (S), characterized in that said means include, from the centre of said plate and the upper portion thereof : a conical spindle (29) with conicity directed downwardly for the winding of a dead turn (S3) after the completion of each coil ; a plurality of vertical needles (25) regularly distributed along the diameter ; and a plurality of needles (26) slanting outwardly, in the same number as the vertical needles and equally distributed, for the completion of generally V-shaped coils, by the cyclical shifting of the wire-guide (45) moved by the cam (21) for bringing the wire around these spindles and needles.

7. Machine as claimed in claims 1-6, characterized in that the vertical needles (25) are secured on the portion (24a) forming the hub of the coil holding plate (24), while the slanting needles (26) are mounted slidably between said hub and a peripheral rotary portion (24b) of the plate provided with a helicoidal groove (24d) extending normal to the centre line of the slanting needles (26) and wherein the shouldered heads 26a of said needles are positioned, whereby said needles may be retracted within the coil holding plate (24) by the rotation of the peripheral portion (24b) relative to the hub (24a).

8. Machine as claimed in claims 1-6, characterized in that the cam (21) integral with the plate (20) on which the coil holding plate (24) is rotating has a double profile or ramp, namely : a vertical peripheral profile and a horizontal upper profile, both profiles or ramps co-operating with rollers (41-42) or similar organs connected to the wire-guide so that the coiling wire (F) held by this guide will will travel along the path around the needles (25-26) and the conical spindle (29) by horizontal and vertical shiftings of the wire-guide.

9. Machine as claimed in claims 1-6-8, characterized in that the wire-guide is comprised of an arm (38) linked hingedly to the end portion of two slide blocks (31) and returned in the lower position by a spring (39) for the permanent abutment of the roller (42) of the horizontal profile linked hingedly in turn to said arm, the slide blocks (31) being passed through a bearing (30) integral with the framework (1) and secured to a plate (33) connecting them to a pressure cylinder (34) for the disengagement of the wire guide and to horizontal rods (35) which are urged elastically towards the cam and attached to a swing-bar (36) linked hingedly to a projection (37a) of the end portion of the slide blocks supporting the contact roller (41) on the peripheral profile of the cam (21), the upper end of the swing-bar (36) abutting against the contact roller (42) with the upper profile of the cam (21).

10. Machine as claimed in claim 1-9, characterized in that the support swing-bar (30) of the wire guide is provided at the upper face thereof with a standard (44) on which a jib (45) is mounted pivotally and vertically movable, the free end of said jib supporting on the one hand a hollow finger (46) urged elastically downwardly to cap the conical spindle (29) of the coil holding plate (24) in order to maintain the dead turns (S3) of the wire, and on the other hand a roller (47) for exerting a pressure on the coils formed one upon another with the appropriate offset, the jib (45) being vertically adjustable by means of a pressure cylinder (48) hanging at the top of the standard (44) and being mounted pivotally by means of a helicoidal ramp (44a), the stroke of the jib being monitored by a stroke end contact (50) integral with said jib and acting against a convenient fixed stop (30) and a convenient mobile stop (51).

11. Machine as claimed in claim 1-5, characterized in that the cam holding plate (20) and the coil holding plate (24) are provided each one with a toothed disk or wheel (19a-23b) moving rotatably relative to a sensor (27-28) intended for counting the number of teeth at each rotation.

12. Machine as claimed in claim 1-5-11, characterized in that the signals of the sensor (28) in front of the toothed disk (23b) integral with the coil holding plate (24) are transmitted to the control cabinet through rings or ring-shaped sliding contacts (19b) secured to the periphery of the cam holding plate (20) and against which fixed brushes are abutted.

13. Machine as claimed in claim 1, characterized in that the pressure tool for interconnecting the wires consists of a cap or press (64) supported by an arm (60) linked hingedly to a support (58) of the framework and operable by means of a lever (62) to be lifted rearwardly or lowered on the coil holding plate (24) for manuel pressure.

14. Machine as claimed in claim 1-13, characterized in that the pressure cap (64) has at least one ringlike portion (67) corresponding to the location of the coils, made of insulating material, in order to provide the interconnection of the coils through softening of the insulating resin of the wire, under the action of a sufficient electric power fed throught the wire.

**Ansprüche**

1. Maschine für scheibenförmige abgeflachte oder kegelige Wicklungen für Elektromotoren, in der Ausführung mit einer drehbar angetriebenen Spulentragplatte (24) und einem Drahtverteilungsmittel mit Radialverlagerung in bezug auf die Platte, für die kontinuierliche Herstellung der Spulen, dadurch gekennzeichnet, dass diese Maschine ein auf einem Träger (5) bei (2) schwenkbar montiertes Motor-Kupplung-Bremse-Aggregat (6-7-9) aufweist, das vermittels einer Übertragungseinheit entweder eine Kurventragplatte (20) bzw. die Spulentragplatte (24) oder nur die Spulentragplatte (24) antreibt, um die Drähte (F) aufzunehmen und in Verbindung mit den dem Drahtverteilungsmittel zugeordneten und mit der Doppelprofilkurve (21) der Platte (20) zusammenwirkenden Rollen (41-42) die Spulen (S) zu bilden, die in V-förmigem Querschnitt einstellbar und in Verlagerung verstellbar sind und kranzenförmig mit in der Mitte vorgesehenen Todtwindungen (S3) angeordnet werden, wobei die Todtwindungen (S3) zum Anschluss mit dem Kommutator dienen, und die Spulen durch ein mit dem Gestellfestgemachtes Pressewerkzeug hernach zusammengefügt werden.

2. Maschine nach Anspruch 1, dadurch gekennzeichnet, dass das Motor-Kupplung-Bremse-Aggregat (6-7-9) auf drei mit einem Träger (5) festgemachten Platinen (5b-5c-5d) montiert wird, wobei dieser Träger bei (2) unter der Arbeitsplatte (1), Konsole oder Wandgestell, gelenkig angebracht und in einer Stellung geeigneter Spannung der Riemen (12-17) oder ähnlicher Übertragungsorgane durch eine auf den Träger (5) und das Gestell (1) gelenkig befestigte Zugstange (69) festgehalten wird.

3. Maschine nach Anspruch 1-2, dadurch gekennzeichnet, dass der Antriebmotor (6) aufhängend unter der Niederplatine (5b) des Trägers (5) zum Montieren der Motoreinheit vorgesehen wird, dass die elektromagnetische Kupplung (7) durch die Mittelplatine (5c) des Trägers getragen ist, und dass die Bremse (9) aufhängend unter der Oberplatine (5d) des Trägers (5) vorgesehen wird, wobei eine drehbare Welle (8) die Bremse und die Kupplung vermittels Lagerungen verbinden, während die Motorhauptwelle (6a) mit der Kupplung durch eine auf der besagten Welle verkeilte Übertragungsscheibe (7a) verbunden wird.

4. Maschine nach Anspruch 1-3, dadurch gekennzeichnet, dass die das Motor-Bremse-Kupplung-Aggregat (6-7-9) mit der Kurventragplatte (20) und der Spulentragplatte (21) verbindende Übertragungseinheit die folgenden Übertragungsrollen aufweist: erstens eine Übertragungsrolle (11) oder ähnliches Organ, die auf die Kupplungsscheibe (7a) verkeilt und durch Rieme (12) oder ähnliches Organ mit einer Übertragungsrolle (13) oder ähnliches Organ verbunden wird, die am Ende einer Antriebwelle (14) für die Drehbewegung der Spulentragplatte (24) verkeilt ist; und zweitens eine weitere Übertragungsrolle (10), die gleichachsig mit der Übertragungsrolle (11) der Motorwelle und auf der Bremsenwelle verkeilt ist, wobei die besagte Übertragungsrolle mittels Riemen (17) mit einer mit der Übertragungsrolle (13) der Spulentragplatte (24) gleichachsig verbunden ist und die Kurventragplatte (20) antreibt.

5. Maschine nach Anspruch 1, dadurch gekennzeichnet, dass die Drehachsen der Kurventragplatte (20) und der Spulentragplatte (24) gegenüber einander verschoben sind, wobei die am Ende die Übertragungsrolle (13) der Spulentragplatte (24) tragende Welle (14) aufweist, während die Spulentragplatte (24) sich vermittels eines Zahnradgetriebes um die Achse der Kurventragplatte nur kreisbahnweise bewegt.

6. Maschine nach Anspruch 1, bei welcher die Spulentragplatte (24) Aufnahmemittel für die die Spulen (S) bildenden Drähte (F) aufweist, dadurch gekennzeichnet, dass diese Aufnahmemittel, von der Mitte der besagten Platte und derer Oberteil aus, aus den folgenden Bauteilen bestehen: eine kegelige Spindel (29) mit nach unten zeigender Verjüngung zum Aufwickeln einer Todtwindung (S3) nach der Ausführung jeder einen der Spulen ; eine Vielzahl senkrechter, einem Durchmesser entsprechend regelmässig verteilter Nadeln (25) ; und eine Vielzahl nach innen geneigter, gleichzähliger wie die senkrechten Nadeln und auch gleichmässig verteilter Nadeln (26), zur Herstellung von im allgemeinen trapezförmigen Spulen durch die zyklischen Verlagerungen der Drahtführung (45), die von der Kurve (21) aus zum Anbringen des Drahts um diese Spindeln und Nadeln herum bewegt wird.

7. Maschine nach Anspruch 1-6, dadurch gekennzeichnet, dass die senkrechten Nadeln auf dem die Nabe der Spulentragplatte (24) bildenden Teil (24a) befestigt sind, während die geneigten Nadeln verschiebbar zwischen die besagte Nabe und einen drehbaren Umfangteil (24b) der Platte montiert werden, die mit einer schraubenförmigen, lotrecht zur Achse der geneigten Nadeln (26) gebildeten Rille (24d) versehen ist, in welcher die gekröpften Köpfe (26a) der besagten Nadeln positioniert sind, die somit durch Umdrehung des Umfangteils (24b) in bezug auf die Nabe (24a) in die Spulentragplatte (24) zurückgeklappt werden können.

8. Maschine nach Anspruch 1-6, dadurch gekennzeichnet, dass die mit der Platte (20), auf welche die Spulentragplatte (24) drehbar bewegt wird, festgemachte Kurve (21) einen doppelten Profil oder eine doppelte Rampe aufweist, und zwar : einen senkrechten Umfangsprofil und einen waagrechten Oberprofil, wobei beide Profile oder Rampen mit Rollen (41-42) oder ähnlichen Organen zusammenwirken, die mit der Drahtführung verbunden sind, damit der von dieser Drahtführung gehaltene Wicklungsdraht (F) die Strecke um die Nadeln (25-26) und die kegelige Spindel (29) herum infolge senkrechter und waagrechter Verschiebungen der Drahtführung durchläuft.

9. Maschine nach Anspruch 1-6-8, dadurch gekennzeichnet, dass die Drahtführung aus einem mit dem Endteil zweier Stössel (31) gelenkig verbundenen Arm (38) besteht, der zur ständigen Abstützung der mit dem besagten Arm auch gelenkig verbundenen Rolle (42) des waagrechten Profils von einer Feder (39) in die Tiefstellung zurückgebracht wird, wobei die Stössel (31) einen mit dem Gestell (1) festgemachten Lager (30) durchsetzen, und auf einer Platte (33) befestigt sind, die sie mit einem Druckzylinder (34) zum Freimachen der Drahtführung und mit waagrechten Stangen (35) verbindet, die federnd in Richtung nach der Kurve geschoben und auf einem Ortscheit (36) befestigt sind, das mit einem Vorsprung (37a) des die Kontaktorolle (41) für den Umfangsprofil der Kurve (21) tragenden Oberteils der Stössel gelenkig verbunden wird, wobei das Oberende des Ortscheits (36) sich gegen die Kontaktrolle (42) für den Oberprofil der Kurve (21) sich abstützt.

10. Maschine nach Anspruch 1-5, dadurch gekennzeichnet, dass der Traglager (30) der Drahtführung auf dessen Oberfläche einen Ständer (44) aufweist, auf welchem ein Ausleger (45) verschwenkbar und höhenverstellbar angeordnet ist, dessen freies Ende einerseits einen Hohlfinger (46) trägt, der elastisch zum Überdecken der kegeligen Spindel (29) der Spulentragplatte (24) zum Halten der Todtwindungen (S3) des Drahts geschoben wird, und andererseits eine Andruckrolle (47) für die aufeinander bei entsprechender Verschiebung gebildeten Spulen trägt, wobei der Ausleger (45) durch ein mittels einer Schraubenrampe (44a) verschwenkbares, oben am Ständer (44) hängendes Druckzylinder (48) verstellbar in der Höhe gesteuert wird, und die Bewegung des Auslegers durch einen mit dem besagten Ausleger festgemachten Endkontakt (50) kontrolliert ist, der gegen einen geigneten ortsfesten Anschlag (30) und einen geeigneten bewegliche Anschlag (51) entgegenwirkt.

11. Maschine nach Anspruch 1-5, dadurch gekennzeichnet, dass die Kurventragplatte (20) und die Spulentragplatte (24) weisen jede eine ein Ritzel oder Zahnrad (19a-23b) auf, das sich in bezug auf einen Fühler (27-28) zum Abzählen der Zähne bei jeder Umdrehung drehbar bewegt.

12. Maschine nach Anspruch 1-5-11, dadurch gekennzeichnet, dass der dem mit der Spulentragplatte (24) festgemachten Zahnrad (23b) gegenüberstehende Fühler (28) seine Meldungen dem Schaltschrank über Ringe oder ringförmige Reibungsteile (19b) übermittelt, die am Umfang der Kurventragplatte (20) befestigt sind, und gegen welche ortsfeste Bürsten sich abstützen.

13. Maschine nach Anspruch 1, dadurch gekennzeichnet, dass das Pressewerkzeug zur Verbindung der Drähte zwischeneinander aus einer Kappe oder Presse (64) besteht, die von einem mit einem Träger (58) des Gestells gelenkig verbundenen Arm (60) getragen wird, wobei dieser Arm durch einen Hebel (62) betätigt werden kann, um nach hinten aufgehoben oder auf die Spulentragplatte (24) gesenkt zu werden, damit das Handpressen erfolgen kann.

14. Maschine nach Anspruch 1-13, dadurch gekennzeichnet, dass die Kappe-Presse (64) am wenigstens einen dem Sitzplatz der Spulen entsprechenden, aus Isolierwerkstoff bestehenden ringförmigen Teil (67) aufweist, um die Verbindung der Spulen zwischeneinander durch Aufweichen des Isolierharzes des Drahts zu bewirken, durch die Einwirkung eines elektrischen Stroms genügender Stromstärke, der duch den Draht hindurch geleitet wird.

*FIG.1*

*FIG.2*

1

FIG.3

**0 030 901**

FIG.4

FIG.5

FIG.6

FIG.7

FIG.8

FIG.10

FIG.9

FIG.11

FIG.12

FIG.13

6